# EUROPÄISCHE PATENTANMELDUNG

(11) **EP 3 072 624 A1**
(43) Veröffentlichungstag der Anmeldung: **28.09.2016**
(21) Anmeldenummer: 15160284.4
(22) Anmeldetag: 23.03.2015
(51) Int. Cl.: B23K 9/02, B23K 9/028, B23K 33/00, F01D 5/02, F01D 5/06, F01D 5/28

(54) **WELLENELEMENT, VERFAHREN ZUM HERSTELLEN EINES SICH AUS ZWEI UNTERSCHIEDLICHEN WERKSTOFFEN ZUSAMMENSETZENDEN WELLENELEMENTS SOWIE ENTSPRECHENDE STRÖMUNGSMASCHINE**

(71) Anmelder: Siemens Aktiengesellschaft, 80333 München (DE)
(72) Erfinder: Kern, Torsten-Ulf, 46485 Wesel (DE); Brußk, Stefan, 45479 Mülheim an der Ruhr (DE); Niepold, Karsten, 45481 Mülheim (DE)

(57) **Zusammenfassung**

Die Erfindung betrifft ein Wellenelement (1) einer Strömungsmaschine (2), insbesondere einer kombinierten Dampfturbine (4), mit mindestens zwei mittels einer Schweißnaht (23) miteinander stoffschlüssig zusammengefügten Wellenteilabschnitten (15, 16), bei welchem diesen Wellenteilabschnitten (15, 16) unterschiedliche chemische und mechanische Eigenschaften innewohnen, wobei die Schweißnaht (23) ein Schweißlagenhöhen-/Schweißnahtbreiten-Verhältnis von 1:14 bis 1:2 aufweist.

## Beschreibung

Die Erfindung betrifft ein Wellenelement einer Strömungsmaschine, insbesondere einer kombinierten Dampfturbine, mit mindestens zwei mittels einer Schweißnaht miteinander stoffschlüssig zusammengefügten Wellenteilabschnitten, bei welchem diesen Wellenteilabschnitten unterschiedliche chemische und mechanische Eigenschaften innewohnen.

Die Erfindung betrifft ein Verfahren zum Herstellen eines sich aus zwei unterschiedlichen Werkstoffen zusammensetzenden Wellenelements, bei welchem zwei aus unterschiedlichen Werkstoffen bestehende Wellensegmente mittels einer Schweißnaht miteinander stoffschlüssig zu dem Wellenelement zusammengefügt werden.

Die Erfindung betrifft ebenso eine Strömungsmaschine, insbesondere eine kombinierte Dampfturbine, mit einem um eine Axialachse umlaufenden Wellenelement, welches zwei Wellenteilabschnitte aus unterschiedlichen Werkstoffen aufweist, die durch eine Schweißnaht stoffschlüssig miteinander verbunden sind.

Gattungsgemäße Wellenelemente tragen in Strömungsmaschinen konzentrisch um eine Axialrotationsachse angeordnete Laufschaufeln bzw. hieraus gebildete Laufschaufelkränze. Hierbei können an einem derartigen Wellenelement mehrere Laufschaufelreihen hintereinander angeordnet sein.

Ein solches Wellenelement kann sich axial durch unterschiedliche Teilbereiche der Strömungsmaschine erstrecken und hierbei unterschiedlichen thermischen und mechanischen Einflüssen ausgesetzt sein.

Am Beispiel einer kombinierten Dampfturbine, welche beispielhaft einen Mitteldruckturbinenteil und einen diesen nachgeschalteten Niedrigdruckturbinenteil umfasst, soll der Aufbau des Wellenelements näher erklärt werden.

In der Regel erstreckt sich dieses Wellenelement axial sowohl durch den Mitteldruckturbinenteil als auch durch den Niedrigdruckturbinenteil der kombinierten Dampfturbine. Beispielsweise erstreckt sich das Wellenelement mit einem ersten Wellenteilabschnitt in dem Mitteldruckturbinenteil und mit einem weiteren Wellenteilabschnitt in dem Niedrigdruckturbinenteil.

In dem Mitteldruckturbinenteil herrschen hinsichtlich eines die kombinierte Dampfturbine durchströmenden Arbeitsmediums sowohl ein höherer Arbeitsdruck als auch eine höhere Arbeitstemperatur des Arbeitsmediums vor, als dies in dem Niedrigdruckturbinenteil der kombinierten Dampfturbine der Fall ist. Beispielsweise beträgt die Arbeitstemperatur des Arbeitsmediums im Bereich des Mitteldruckturbinenteils mehr als 400°C.

Insofern wird auch der erste Wellenteilabschnitt des Wellenelements in diesem Mitteldruckturbinenteil thermisch höher belastet, wenn er dort mit dem Arbeitsmedium wechselwirkt.

Der weitere Wellenteilabschnitt des Wellenelements in dem nachgeschalteten Niedrigdruckturbinenteil ist hierbei zwar thermisch geringer beansprucht, jedoch wird er mechanisch stärker belastet.

Insofern ist es wünschenswert, wenn die unterschiedlich belasteten Wellenteilabschnitte des Wellenelements entsprechend angepasste Werkstoffeigenschaften aufweisen.

Günstig ist es, wenn der ersten Wellenteilabschnitt im Bereich des Mitteldruckturbinenteils aus einem eher warmfesten Werkstoff besteht, wohingegen der weitere Wellenteilabschnitt im Bereich des Niedrigdruckturbinenteils aus einem eher kaltzähen Werkstoff gebildet sein sollte.

Speziell an einer Strömungsmaschine, wie beispielsweise eben einer solchen kombinierten Dampfturbine mit einem Mitteldruckturbinenteil und mit einem sich daran anschließenden Niederdruckturbinenteil, kann ein optimales Eigenschaftsprofil hinsichtlich eines entlang sich in axialer Richtung durch die Strömungsmaschine zumindest teilweise erstreckenden und in Monoblockbauweise hergestelltes Wellenelements nicht immer realisiert werden. Dies liegt im Wesentlichen daran, dass bei der Monoblockbauweise die gewünschten Werkstoffeigenschaften kombiniert werden, wodurch jedoch nachteilig Kompromisse eingegangen werden müssen, welche den optimalen Betrieb der Strömungsmaschine bzw. der kombinierten Dampfturbine unterbinden.

Deshalb werden derartige Wellenelemente mittels eines geeigneten Schweißverfahrens oftmals aus mehreren mit unterschiedlichen Eigenschaften ausgestatteten Wellensegmenten thermisch zusammengefügt.

Ein derartiges Wellen-Verbindungsschweißen stellt eine brauchbare Alternative dar, um Werkstoffe mit unterschiedlichen chemischen Zusammensetzungen und mit unterschiedlichen mechanischen Eigenschaften, wie insbesondere "warmfest" und "kaltzäh", thermisch miteinander zusammenfügen zu können.

Hierbei tritt jedoch nicht selten die Problematik auf, dass die unterschiedlichen Materialeigenschaften dieser Wellensegmente eine spezielle Schweißkonstruktion mit einer Pufferschweißung erfordern, mittels welcher beispielsweise ein warmfestes Wellensegment eines späteren ersten Wellenteilabschnitts des Wellenelements mit einem kaltzähen Wellensegment eines späteren weiteren Wellenteilabschnitts des Wellenelements verschweißt werden kann. Hierbei wird die Pufferschweißung bevorzugt auf den hochwarmfesten Werkstoff des warmfesten Wellensegments aufgetragen.

Beispielsweise ist eine Vorgehensweise mit einer Pufferschweißung aus der US 4,962,586 bekannt.

Eine derartige Vorgehensweise funktioniert so weit auch gut, um ein Wellenelement, etwa einer kombinierten Dampfturbine, mit verschiedenen Wellenteilabschnitten zu schaffen, welchen unterschiedliche Eigenschaften innewohnen.

Jedoch erscheint sie auch zeit- und damit kostenintensiv zu sein.

Um die Nachteile hinsichtlich einer derartigen zusätzlichen Pufferschweißung zu vermeiden, ist in der WO 2004/051056 A1 eine andere Methode offenbart, bei welcher durch eine gezielte Werkstoffauswahl bezüglich der thermisch miteinander zu fügenden Wellensegmente sowie einer angepassten Wärmebehandlung auf eine solche Pufferschweißung verzichtet werden kann.

Es ist Aufgabe der Erfindung, gattungsgemäße Wellenelemente, welche zum Einsatz an einer Strömungsmaschine vorgesehen sind, sowie insbesondere diesbezügliche unter Umgehung einer Pufferschweißung bekannte Herstellverfahren weiterzuentwickeln.

Die Aufgabe der vorliegenden Erfindung wird von einem Wellenelement einer Strömungsmaschine, insbesondere einer kombinierten Dampfturbine, mit mindestens zwei mittels einer Schweißnaht miteinander stoffschlüssig zusammengefügten Wellenteilabschnitten gelöst, bei welchem diesen Wellenteilabschnitten unterschiedliche chemische und mechanische Eigenschaften innewohnen, wobei die Schweißnaht ein Schweißlagenhöhen- zu Schweißnahtbreiten-Verhältnis von 1:14 bis 1:2 aufweist.

Die vorliegende Erfindung betrifft insbesondere eine mittels Energiedichte geregelte Schutzgasschweißung in einem Engspalt an steilen Flanken mit gezielter Werkstoff-Eigenschaft-Beeinflussung in der eigentlichen Schweißverbindung bzw. Schweißnaht.

Das Wellenelement einer Strömungsmaschine wird abschnittsweise oftmals thermisch und mechanisch unterschiedlich belastet, sei es in einem Verdichterbereich oder in einem Turbinenbereich der Strömungsmaschine.

Insbesondere ein Wellenelement einer kombinierten Dampfturbine ist hiervon betroffen, wenn ein Hochdruckturbinenteil, ein Mitteldruckturbinenteil und/oder ein Niederdruckturbinenteil ein durchgängiges Wellenelement aufweisen, welches von einem die kombinierte Dampfturbine durchströmenden Arbeitsmedium umströmt wird.

Derartige kombinierte Dampfturbinen weisen einen Einströmungsbereich und zwei oder mehr mit Lauf- und Leitschaufeln ausgebildete, hintereinander geschaltete Turbinenteile auf.

Hierbei wird beispielsweise der erste Wellenteilabschnitt des Wellenelements im Bereich des Hochdruckturbinenteils bzw. des Mitteldruckturbinenteils thermisch höher belastet als etwa der weitere Wellenteilabschnitt des Wellenelements im Bereich des Niederdruckturbinenteils usw.

Aus diesem Grund, ist es vorteilhaft diesen ersten Wellenteilabschnitt mithilfe eines warmfesteren Werkstoffs auszugestalten.

Hingegen unterliegt der weitere Wellenteilabschnitt des Wellenelements im Bereich des Niederdruckturbinenteils einer höheren mechanischen Belastung als der erste Wellenteilabschnitt des Wellenelements im Bereich des Hochdruck- bzw. Mitteldruckturbinenteils.

Insofern ist es vorteilhaft, wenn der weitere Wellenteilabschnitt aus einem kaltzäheren Werkstoff hergestellt ist. Gleiches gilt auch im Hinblick der Wellenteilabschnitte des Mitteldruckturbinenteils der kombinierten Dampfturbine in Bezug auf das Niederdruckturbinenteil der kombinierten Dampfturbine.

Jedenfalls kann vorliegend die Schweißverbindung von Wellenteilabschnitten aus unterschiedlichen Werkstoffen wesentlich besser ausgestaltet werden als bisher.

Die Aufgabe der Erfindung wird insofern auch von einem Verfahren zum Herstellen eines sich aus zwei unterschiedlichen Werkstoffen zusammensetzenden Wellenelements gelöst, bei welchem zwei aus unterschiedlichen Werkstoffen bestehende Wellensegmente mittels einer Schweißnaht stoffschlüssig miteinander zu dem Wellenelement zusammengefügt werden, wobei die Schweißnaht mit einem Schweißlagenhöhen-/Schweißnahtbreiten-Verhältnis von 1:14 bis 1:2 erzeugt wird.

Die vorliegende Erfindung betrifft insbesondere ein Herstellverfahren eines entsprechenden Wellenelements unter Zuhilfenahme einer Schutzgasschweißung in einem teilmartensitischen Bereich mit 70% bis 80% Martensit-Umwandlung zum stoffschlüssigen Verbinden zweier Werkstoffe mit unterschiedlichen chemischen und/oder mechanischen Eigenschaften unter Umgehung der Verwendung einer Pufferschweißung.

Es versteht sich, dass die Schweißverbindung in dem vorliegenden Engspalt zwischen den miteinander stoffschlüssig zu dem Wellenelement zusammenzufügenden Wellensegmenten insbesondere durch nachstehende Merkmale weiterentwickelt werden kann.

Somit wird speziell bei dem vorliegenden Engspaltschweißen durch eine Weiterentwicklung der Prozessführung, -überwachung und -regelung eine gezielte Steuerung der Schweißverbindung bzw. der Schweißnaht im Hinblick auf die Einstellung von Eigenschaften in den miteinander zu verschmelzenden Werkstoffen, in der Wärmeeinflusszone der Schweißflanken und/oder im Schweißgut selbst möglich.

Das Wellenelement kann hierbei vielfältig ausgebildet sein. Beispielsweise ist das Wellenelement als Rotorteil ausgestaltet.

Eine weitere Ausführungsvariante sieht beispielsweise vor, dass die Schweißnaht mehrere Schweißlagen umfasst, welche jeweils durch eine einzige Schweißraupe erzeugt ist, um über die eingestellte Geometrie der jeweiligen Schweißraupe eine Schweißlagenvergütung, insbesondere eine Zwischenlagenvergütung, der jeweils darunter liegenden Schweißlage zu erzielen. Auch hierdurch kann die zwischen zwei verschiedenen Werkstoffen erzeugte Schweißverbindung bzw. Schweißnaht deutlich verbessert werden. Allein durch diesen Aufbau der Schweißlage der Schweißnaht kann ein gattungsgemäßes Wellenelement vorteilhaft weiter entwickelt werden, so dass dieses Merkmal auch ohne die übrigen Merkmale der Erfindung vorteilhaft ist.

Insofern kann ein Verfahren zum Herstellen eines entsprechenden Wellenelements entsprechend dadurch weiterentwickelt werden, dass Schweißlagen der Schweißnaht durch lediglich eine einzige Schweißraupe erzeugt wird, um über die eingestellte Geometrie der jeweiligen Schweißraupe eine Schweißlagenvergütung, insbesondere eine Zwischenlagenvergütung, der jeweils darunter liegenden Schweißlage zu erzielen.

Wie vorstehend bereits angedeutet, wird die Schweißnaht bevorzugt in einem Engspalt ausgebildet, wodurch die Schweißlagen jeweils durch eine einzige Schweißraupe problemlos erzeugt werden kann.

Sowohl das vorliegende Schweißlagenhöhen-/Schweißnahtbreiten-Verhältnis als auch unabhängig davon der Aufbau der Schweißlagen hinsichtlich der Anzahl der erforderlichen Schweißraupen kann konstruktiv und verfahrenstechnisch gut insbesondere im Engspalt erzielt werden.

Allein deshalb sieht eine weitere vorteilhafte Ausführungsvariante vor, dass die Schweißnaht zwei sich axial gegenüberliegende, steile Fugenflanken umfasst, welche jeweils gegenüber einer Vertikalen einen Öffnungswinkel von < 1,5°, vorzugsweise von < 1°, aufweisen, um eine Tiefenwirkung einer eingebrachten Wärmeenergie besonders gut zu steuern. Hierdurch kann eine lokale Werkstoffbeeinflussung in den jeweiligen Flankenbereichen besonders vorteilhaft erzielt werden.

Darüber hinaus wurde gefunden, dass eine ausgezeichnete Schweißverbindung bzw. Schweißnaht im Zusammenhang mit ausgewählten Werkstoffen erzielt werden kann.

Hierbei ist es besonders vorteilhaft, wenn das erste der mindestens zwei Wellenteilabschnitte aus einem warmfesten Werkstoff 1CrMoV; 2CrMoNiWV; 10CrMoWVNbN; 10CrMoVNbN oder 9CrMoCoBNbN bzw. 9Cr3CoWNbBN hergestellt ist.

Die Qualität der zu erzeugenden Schweißverbindung bzw. der Schweißnaht kann nochmals erheblich verbessert werden, wenn das weitere der mindestens zwei Wellenteilabschnitte aus einem kaltzähen Werkstoff 2,0-4,0NiCrMoV; 2,0-4,0NiCrMoV Super Clean oder 2CrNiMo hergestellt ist.

Insbesondere das der Erfindung zugrunde liegende Verfahren kann vorteilhaft ausgebildet werden, wenn ein Wellensegment vor dem Schweißen zumindest in einem Bereich einer Schweißflanke auf eine Vorwärmtemperatur zwischen 100°C und 350°C, vorzugsweise zwischen 150°C und 300°C, vorgewärmt wird, um eine Wärmeflussverteilung zu verbessern. Hierdurch kann speziell eine Reduzierung der Ansprunghärte in beiden Werkstoffen der miteinander stoffschlüssig zu verbindenden Wellensegmente erzielt werden.

Weiter ist es auch unabhängig von den übrigen Merkmalen der Erfindung vorteilhaft, wenn die Schweißnaht, insbesondere die einzelnen Schweißraupen der Schweißlagen, mittels einer Schweißgeschwindigkeit von 30 mm/min bis 450 mm/min, vorzugsweise von 40 mm/min bis 350 mm/min, erzeugt wird. Insbesondere die vorstehend genannten warmfesten und kaltzähen Werkstoffe können hierdurch besonders vorteilhaft zusammengefügt werden.

Kumulativ oder alternativ ist es besonders zweckmäßig, wenn die Schweißnaht, insbesondere die einzelnen Schweißraupen der Schweißlagen, mittels einer Streckenenergie von 5 kJ/cm bis 30 kJ/cm erzeugt wird, da allein hierdurch unabhängig von den übrigen Merkmalen der Erfindung positiv auf die die beiden unterschiedlichen Werkstoffe verbindende Schweißnaht eingewirkt werden kann.

Auf die Schweißverbindung bzw. die Schweißnaht kann weiter günstig eingewirkt werden, wenn die Schweißnaht, insbesondere die einzelnen Schweißraupen der Schweißlagen, einer lokalen Wärmebehandlung unterzogen wird. Hierbei spielt die Differenz in unterschiedlichen Qualitäts-Wärmenachbehandlungen der miteinander zu verbindenden Werkstoffe eine vernachlässigbare Rolle für die Eigenschaften der vorliegenden Schweißnaht bei einem zusätzlichen Aufbringen einer Temperatur von bis zu 20K unterhalb der Anlasstemperatur des höher legierten Grundwerkstoffs, während einer gezielten Eigenschaftseinstellung.

Durch die hier beschriebene Erfindung wird ein Herstellungsprozess hinsichtlich eines Wellenelements besonders gut ermöglicht, welcher durch Schutzgasschweißungen mit gezielter Steuerung unter Einhaltung definierter Parameter die Eigenschaften in der Schweißverbindung eines warmfesten und eines kaltzähen Werkstoffs ohne Pufferschweißung einstellt.

Insofern kann bei der Ausführung einer Wellenschweißverbindung aus einem warmfesten Werkstoff einerseits und einem kaltzähen Werkstoff andererseits für verschiedene Werkstoffkombinationen auf eine derartige Pufferschweißung verzichtet werden.

Die Aufgabe der Erfindung wird auch von einer Strömungsmaschine, insbesondere kombinierte Dampfturbine, mit einem um eine Axialachse umlaufenden Wellenelement gelöst, welches zwei Wellenteilabschnitte aus unterschiedlichen Werkstoffen aufweist, die durch eine Schweißnaht stoffschlüssig miteinander verbunden sind, wobei die Strömungsmaschine sich durch ein Wellenelement nach einem der hier beschriebenen Merkmale auszeichnet und/oder wobei das Wellenelement nach einem Verfahren nach einem der hier beschriebenen Merkmale hergestellt ist.

Eine durch das vorliegende Wellenelement ausgerüstete Strömungsmaschine kann kostengünstiger hergestellt werden.

Weitere Merkmale, Effekte und Vorteile vorliegender Erfindung werden anhand anliegender Zeichnung und nachfolgender Beschreibung erläutert, in welchen beispielhaft ein im Sinne der Erfindung ausgestaltetes Wellenelement einer beispielhaften Strömungsmaschine dargestellt und beschrieben ist.

In der Zeichnung zeigen:

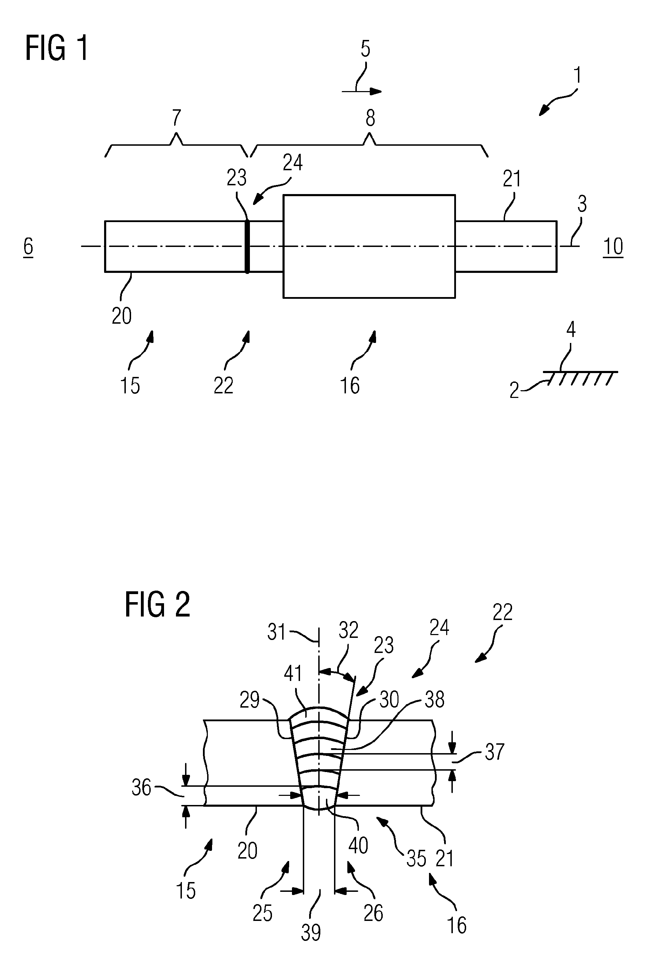

- Figur 1: schematisch eine Teilansicht eines Wellenelements einer Dampfturbine in einem Übergangsbereich zwischen einem Mitteldruckturbinenteil und einem Niederdruckturbinenteil mit zwei aus unterschiedlichen Werkstoffen bestehenden Wellenteilabschnitten, welche mittels einer Schweißverbindung stoffschlüssig miteinander zusammengefügt sind; und
- Figur 2: schematisch die Schweißverbindung in einem Randbereich eines ersten Wellensegments aus einem warmfesten Werkstoff und eines weiteren Wellensegments aus einem kaltzähen Werkstoff des in der Figur 1 gezeigten Wellenelements, wobei das erste Wellensegment den Wellenteilabschnitt an dem Mitteldruckturbinenteil und das weitere Wellensegment den Wellenteilabschnitt an dem Niederdruckturbinenteil ausbildet.

Das in der Figur 1 gezeigte Wellenelement 1 dient der Aufnahme einer Vielzahl an Laufschaufeln (nicht dargestellt) und es ist derart in einer nicht näher gezeigten Strömungsmaschine 2 verbaut, dass es im Betrieb der Strömungsmaschine 2 um eine Axialrotationsachse 3 rotiert.

In diesem Ausführungsbeispiel handelt es sich bei der Strömungsmaschine 2 um eine nicht näher gezeigte kombinierte Dampfturbine 4, welche sich durch einen Mitteldruckturbinenteil (nicht gezeigt) und einen stromab daran anschließenden Niederdruckturbinenteil (nicht gezeigt) auszeichnet.

Das Wellenelement 1 erstreckt sich in axialer Richtung 5 entlang der Axialrotationsachse 3 von einem Eingangsbereich 6 der kombinierten Dampfturbine 4 durch einen Mitteldruckbereich 7 der kombinierten Dampfturbine 4 weiter über einen Niederdruckbereich 8 der kombinierten Dampfturbine 4 bis zu einem Ausgangsbereich 10 der kombinierten Dampfturbine 4.

Hierbei befindet sich ein erster Wellenabschnitt 15 im Wesentlichen in dem Mitteldruckbereich 7 und ein weiterer Wellenabschnitt 16 ist im Wesentlichen in dem Niederdruckbereich 8 angeordnet, so dass diese Wellenteilabschnitte 15 und 16 mit einem die kombinierte Dampfturbine 4 von dem Eingangsbereich 6 zu dem Ausgangsbereich 10 durchströmenden Arbeitsmedium, vorwiegend überhitzter Dampf, wechselwirken.

Hierbei besitzt das Arbeitsmedium im Mitteldruckbereich 7 insbesondere noch eine höhere Arbeitstemperatur als im Niederdruckbereich 8, so dass der erste Wellenteilabschnitt 15 thermisch höher belastet ist als der weitere Wellenteilabschnitt 16 des Wellenelements 1.

Jedoch ist der weitere Wellenteilabschnitt 16 mechanisch höher belastet als der erste Wellenteilabschnitt 15 des Wellenelements 1.

Dies bedingt, dass der erste Wellenabschnitt 15 des Wellenelements 1 aus einem warmfesteren Werkstoff (nicht gesondert beziffert) hergestellt werden soll als der weitere Wellenabschnitt 16 des Wellenelements 1.

Der hier verwendete warmfeste Werkstoff ist 1CrMoV.

Er kann alternativ jedoch auch durch einen anderen der warmfesten Werkstoffe 2CrMoNiWV, 10CrMoWVNbN, 10CrMoVNbN oder 9CrMoCoBNbN bzw. 9Cr3Co3WNbBN ersetzt werden.

Folglich soll der weitere Wellenabschnitt 16 des Wellenelements 1 aus einem kaltzäheren Werkstoff (nicht gesondert beziffert) hergestellt sein als der erste Wellenabschnitt 15 des Wellenelements 1.

Der hier verwendete kaltzähe Werkstoff ist 2,0 NiCrMoV.

Er kann alternativ jedoch auch durch einen anderen der kaltzähen Werkstoffe 2,0-4,0NiCrMoV, 2,0-4,0NiCrMoV Super Clean oder 2CrNiMo ersetzt werden.

Jedenfalls ist das Wellenelement 1 aus einem ersten Wellensegment 20 (warmfester Werkstoff) und einem weiteren Wellensegment 21 (kaltzäher Werkstoff) zusammengesetzt, wobei die beiden unterschiedlichen Wellensegmente mittels einer Schweißverbindung 22 thermisch gefügt, sprich stoffschlüssig miteinander zusammengefügt, sind.

Die Figur 2 zeigt den Aufbau einer Schweißnaht 23 der Schweißverbindung 22 schematisch und teilweise anhand eines Randbereichsausschnittes 24 des Wellenelements 1.

Der Schweißverbindung 22 bzw. der Schweißnaht 23 liegt ein Engspalt 25 zwischen dem ersten Wellensegment 20 und dem weiteren Wellensegment 21 zugrunde, welche sich axial gegenüberliegen und einen Schweißstoß 26 ausgestalten.

Am Schweißstoß 26 sind zwei Fugenflanken 29 und 30 vorhanden, welche von den Wellensegmenten 20 und 21 gebildet werden, wobei jede der Fugenflanke 29 und 30 gegenüber der Vertikalen 31 lediglich einen Öffnungswinkel 32 von < 1° (nur exemplarisch beziffert) aufweist. Hierdurch können die Effekte eines unerwünschten Wärmeeintrags in die benachbarten Werkstoffbereiche reduziert werden. Der Öffnungswinkel 32 und damit die Anstellung der Fugenflanken bzw. der Schweißflanken 29 und 30 sind hierbei überzeichnet dargestellt.

An dem so vorbereiteten Schweißstoß 26 kann nun die im Sinne der Erfindung ausgebildete Schweißnaht 23 weiter vorteilhaft ausgebildet werden.

Die Schweißnaht 23 zeichnet sich insbesondere durch ein Schweißlagenhöhen-/Schweißnahtbreiten-Verhältnis 35 von 1:14 bis 1:2, wobei vorliegend die Schweißlagenhöhen 36 durch die Dicke 37 einer einzelnen Schweißraupe 38 und die Schweißnahtbreite 39 durch die Breite 40 der diesbezüglichen einzelnen Schweißraupe 38 formuliert ist.

Das Schweißlagenhöhen-/Schweißnahtbreiten-Verhältnis 35 ist in diesem Ausführungsbeispiel auch abhängig von der sich in Richtung der Vertikalen 31 sich ändernden Fugenbreite.

Hierbei fluchtet die Dicke 37 der Schweißlagenhöhe 36 in Richtung der Vertikalen 31 und die Breite 40 der Schweißnahtbreite 39 erstreckt sich quer zu dieser Vertikalen 31.

Eine weitere Besonderheit der vorliegenden Schweißverbindung 22 bzw. der Schweißnaht 23 ergibt sich dadurch, dass jeder der Schweißlagen 41 nur eine einzige Schweißraupe 38 aufweist. Hierdurch kann besonders einfach Einfluss auf die Schweißlagenvergütung genommen werden.

Jeder der Schweißraupen 38 ist hierbei beispielhaft mit einer Schweißgeschwindigkeit von 100 mm/min bei einer Streckenenergie von 15 kJ/cm erzeugt worden.

Die Schweißflanken 29 und 30 sind hierbei zuvor beispielhaft auf eine Vorwärmtemperatur von 200°C vorgewärmt worden, um eine verbesserte Wärmeflussverteilung zu erzielen.

Obwohl die Erfindung im Detail durch das bevorzugte Ausführungsbeispiel näher illustriert und beschrieben wurde, so ist die Erfindung nicht durch dieses offenbarte Ausführungsbeispiel eingeschränkt, und andere Variationen können vom Fachmann hieraus abgeleitet werden, ohne den Schutzumfang der Erfindung zu verlassen.

## Patentansprüche

1. Wellenelement (1) einer Strömungsmaschine (2),
insbesondere einer kombinierten Dampfturbine (4),
mit mindestens zwei mittels einer Schweißnaht (23) miteinander stoffschlüssig zusammengefügten Wellenteilabschnitten (15, 16), bei welchem diesen Wellenteilabschnitten (15, 16) unterschiedliche chemische und mechanische Eigenschaften innewohnen,
wobei die Schweißnaht (23) ein Schweißlagenhöhen-/Schweißnahtbreiten-Verhältnis von 1:14 bis 1:2 aufweist.

2. Wellenelement (1) nach Anspruch 1,
wobei die Schweißnaht (23) mehrere Schweißlagen (41) umfasst, welche jeweils durch eine einzige Schweißraupe (38) erzeugt ist, um über die eingestellte Geometrie der jeweiligen Schweißraupe (38) eine Schweißlagenvergütung, insbesondere eine Zwischenlagenvergütung, der jeweils darunter liegenden Schweißlage (41) zu erzielen.

3. Wellenelement (1) nach Anspruch 1 oder 2,
wobei die Schweißnaht (23) zwei sich axial gegenüberliegende, steile Fugenflanken (29, 30) umfasst, welche jeweils gegenüber einer Vertikalen (31) einen Öffnungswinkel (32) von < 1,5°, vorzugsweise von < 1°, aufweisen, um eine Tiefenwirkung einer eingebrachten Wärmeenergie besonders gut zu steuern.

4. Wellenelement (1) nach einem der Ansprüche 1 bis 3,
wobei das erste der mindestens zwei Wellenteilabschnitte (15, 16) aus einem warmfesten Werkstoff 1CrMoV; 2CrMoNiWV; 10CrMoWVNbN; 10CrMoVNbN; 9CrMoCoBNbN oder 9Cr3Co3WNbBN hergestellt ist.

5. Wellenelement (1) nach einem der Ansprüche 1 bis 4,
wobei das weitere der mindestens zwei Wellenteilabschnitte (15, 16) aus einem kaltzähen Werkstoff 2,0-4,0NiCrMoV; 2,0-4,0NiCrMoV Super Clean oder 2CrNiMo hergestellt ist.

6. Verfahren zum Herstellen eines sich aus zwei unterschiedlichen Werkstoffen zusammensetzenden Wellenelements (1),
insbesondere des Wellenelements (1) nach einem der vorstehenden Ansprüche,
bei welchem zwei aus unterschiedlichen Werkstoffen bestehende Wellensegmente (20, 21) mittels einer Schweißnaht (23) stoffschlüssig miteinander zu dem Wellenelement (1) zusammengefügt werden,
wobei die Schweißnaht (23) mit einem Schweißlagenhöhen- zu Schweißnahtbreiten-Verhältnis (35) von 1:14 bis 1:2 erzeugt wird.

7. Verfahren nach Anspruch 6,
wobei Schweißlagen (41) der Schweißnaht (23) durch lediglich eine einzige Schweißraupe (38) erzeugt wird, um über die eingestellte Geometrie der jeweiligen Schweißraupe (38) eine Schweißlagenvergütung, insbesondere eine Zwischenlagenvergütung, der jeweils darunter liegenden Schweißlage (41) zu erzielen.

8. Verfahren nach Anspruch 6 oder 7,
wobei ein Wellensegment (20, 21) vor dem Schweißen zumindest in einem Bereich einer Schweißflanke (29, 30) auf eine Vorwärmtemperatur zwischen 100°C und 350°C, vorzugsweise zwischen 150°C und 300°C, vorgewärmt wird, um eine Wärmeflussverteilung zu verbessern.

9. Verfahren nach einem der Ansprüche 6 bis 8,
wobei die Schweißnaht (23), insbesondere die einzelnen Schweißraupen (38) der Schweißlagen (41), mittels einer Schweißgeschwindigkeit von 30 mm/min bis 450 mm/min, vorzugsweise von 40 mm/min bis 350 mm/min, erzeugt wird.

10. Verfahren nach einem der Ansprüche 6 bis 9,
wobei die Schweißnaht (23), insbesondere die einzelnen Schweißraupen (38) der Schweißlagen (41), mittels einer Streckenenergie von 5 kJ/cm bis 30 kJ/cm erzeugt wird.

11. Verfahren nach einem der Ansprüche 6 bis 10,
wobei die Schweißnaht (23), insbesondere die einzelnen Schweißraupen (38) der Schweißlagen (41), einer lokalen Wärmebehandlung unterzogen wird.

12. Strömungsmaschine (2),
insbesondere kombinierte Dampfturbine (4),
mit einem um eine Axialachse (3) umlaufenden Wellenelement (1), welches zwei Wellenteilabschnitte (15, 16) aus unterschiedlichen Werkstoffen aufweist, die durch eine Schweißnaht (23) stoffschlüssig miteinander verbunden sind, wobei die Strömungsmaschine (2) sich durch ein Wellenelement (1) nach einem der Ansprüche 1 bis 5 auszeichnet und/oder
wobei das Wellenelement (1) nach einem Verfahren nach einem der Ansprüche 6 bis 11 hergestellt ist.
